Europäisches Patentamt

European Patent Office

Office européen des brevets

(19)

(11) **EP 1 603 261 A1**

(12) **EUROPEAN PATENT APPLICATION**

(43) Date of publication:
**07.12.2005 Bulletin 2005/49**

(51) Int Cl.7: **H04J 14/02**, H04B 10/155,
G02F 1/313

(21) Application number: **05016705.5**

(22) Date of filing: **26.11.2002**

| | |
|---|---|
| (84) Designated Contracting States:<br>**AT BE BG CH CY CZ DE DK EE ES FI FR GB GR IE IT LI LU MC NL PT SE SK TR**<br>Designated Extension States:<br>**AL LT LV MK RO SI** | (72) Inventors:<br>• **Daou, Fadi**<br>  **Milton, MA 02186 (US)**<br>• **El-Dada, Louay**<br>  **Lexington, MA 02421 (US)** |
| (30) Priority: **26.11.2001 US 333323 P** | (74) Representative: **Hughes, Andrea Michelle**<br>**Frank B. Dehn & Co.,**<br>**European Patent Attorneys,**<br>**179 Queen Victoria Street**<br>**London EC4V 4EL (GB)** |
| (62) Document number(s) of the earlier application(s) in accordance with Art. 76 EPC:<br>**02784617.9 / 1 454 446** | |
| (71) Applicant: **E.I. du Pont de Nemours and Company Wilmington., DE 19805 (US)** | Remarks:<br>This application was filed on 01 - 08 - 2005 as a divisional application to the application mentioned under INID code 62. |

(54) **Methods and devices to minimize the optical loss when multiplexing optical signals from a plurality of tunable laser sources**

(57)     Methods of minimizing optical loss when combining signals from a plurality of laser sources. The method involves disposing a 2 × 1 Y-branch optical waveguide on a substrate, wherein the Y-branch consists of two converging input branches and a single output branch, each input branch being provided with an independent heating means proximate thereto. The method further comprises inputting an optical signal to one of the input branches and simultaneously inputting a second optical signal to the other of the branches, actuating one or both of the heaters, adjusting the degree of heating in each of the heaters in order to adjust the relative intensity of the introduced optical signals to achieve a desired ratio, and directing the resetting output signal into at least one optical fiber.

<u>Figure 1</u>

Fixed Wavelength Lasers
$\lambda(1)$
$\lambda(2)$
$\lambda(M)$
$$\text{Output} = \sum_{1}^{M} \lambda(i)$$

Printed by Jouve, 75001 PARIS (FR)

**Description**

FIELD OF THE INVENTION

The present invention relates to methods and optical signal devices that minimize the optical loss when combining the optical signals from a plurality of laser sources, said sources being tunable or non-tunable.

TECHNICAL BACKGROUND

Combining N *tunable* lasers is implemented today either with switches and a fixed multiplexer, or with a broadband combiner, which can be a tree of N-1 $2\times1$ combiners arranged in a binary tree with S stages ($2^S$=N).

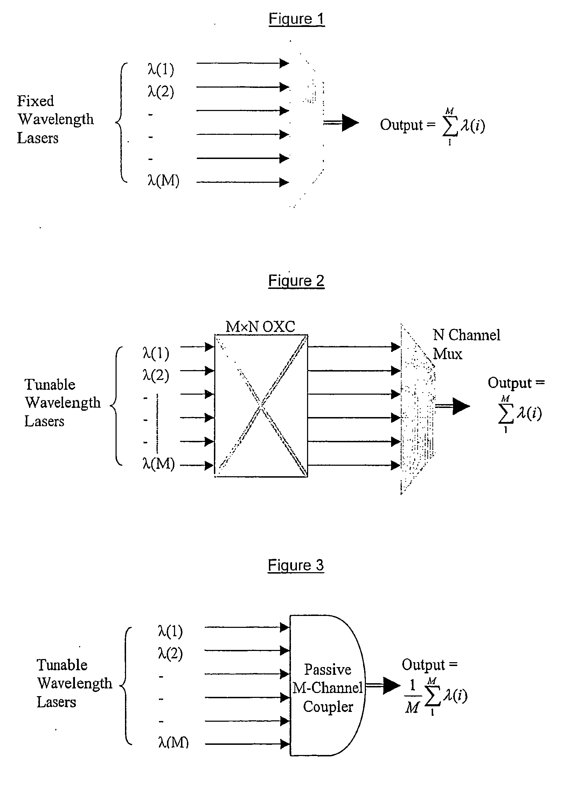

Combining *fixed* lasers in a wavelength division multiplexing (WDM) system is implemented using fixed filter functions, such as arrayed waveguide gratings (AWG's), Echelle gratings, or arrays of thin film filters. In such implementations, a fixed physical connection between the light source and the filter input is made as shown in Figure 1. In this implementation, the combination of optical signals works when each optical signal is carried on a fixed pre-determined wavelength. If the wavelength of a signal were to be changed to another wavelength corresponding to a different WDM channel, said signal does not get added in the combiner and exits the transmission path. This combination method is therefore not usable with tunable lasers, where the wavelength of an optical signal can be dynamically changed.

Combining the optical signals of *tunable* lasers in a WDM system is implemented in one of the following methods:

In one method referred to as OXC & Fixed filters; an $M\times N$ optical cross connect (OXC) switch can be used to interface between the tunable lasers and the fixed multiplexer (MUX) as shown in Figure 2.

In the above implementation:

- Scalability -- M represents the number of tunable lasers used in the system, N is the number of accessible channels on the WDM system. Scaling either the port count or the number of accessible channels requires physical reconfiguration.
- Cost -- The combined cost of the MxN optical cross connect and the fixed filter device or array make this implementation costly.
- Performance degradation through insertion loss, polarization dependent loss (PDL), and other parasitics.

In a second method referred to as passive couplers, combining multiple tunable lasers can be accomplished using broadband (essentially wavelength independent) couplers as shown in Figure 3. When combining M optical signals on a single physical medium without consideration to the carrier wavelength or amplitude of the signals, the resulting output power is expressed as:

$$\text{Output Power} = \Sigma\ \lambda(i)/M \qquad \text{Eq. 1}$$

where $\lambda(i)$ is the optical power level of the optical signal from each source.

In the two above implementations, a load balancing (or optical signal power level equalization) operation is often used in addition to multiplexing in order to equalize the optical power level in all channels. Said operation is done by attenuating individual channels with higher optical power to match the transmitted optical power level of the signal with the minimum power level, resulting in additional signal power loss.

In many system applications (such as protection switching or capacity provisioning), an additional laser source is made available along with each used source, but the additional source or sources is/are not always energized. The presence of said additional sources results in a larger number of branches in combiners, thus reducing the available optical power by the factor mentioned in Eq. 1. Figure 4 shows an example of a 1:1 protected ring with a passive coupler, where one in each pair of sources is active at once. In this example, two source pairs ($\lambda$1A/$\lambda$1B and $\lambda$2A/$\lambda$2B) exist (at $\lambda$1 and $\lambda$2, respectively), and the active sources $\lambda$1A and $\lambda$2A have optical power levels of 0.8 mW and 1 mW, respectively. In this embodiment, the combiner output power is equal to 0.2 mW at $\lambda$1 and 0.25 mW at $\lambda$2. $\lambda$2 would typically be further attenuated to 0.2 mW for load balancing of the channels.

US 5,964,677 discloses a laser diode power combiner comprising a dye laser operably coupled to an array of laser diodes for combining optical power from the laser diodes into a coherent laser beam.

US 5,737,459 discloses an optical multiplexer suitable for use with optically pumped amplifiers.

SUMMARY OF THE INVENTION

The present invention consists of attenuating the power levels of all the optical signals to essentially the power of the weakest optical signal invention and describes methods and optical signal devices that minimize the optical loss when combining the optical signals from a plurality of tunable laser sources of typically differing wavelengths. One method involves combining a portion of the optical signal from each source, said portion being typically inversely proportional to the relative optical power level. Another method involves adding the totality of the optical signal from each source with essentially no excess loss, or equalizing the power level of all the optical signals to the power level of the weakest signal with essentially no excess loss.

One method of combining a plurality of optical signals from laser sources, said sources being tunable or non-tunable, achieves essentially no excess loss, wherein said method comprises inputting said optical signals into a dynamically balanceable combiner selected from the group consisting of a: Y junction, X junction, multimode interference (MMI) coupler, star coupler, directional coupler, or Mach-Zehnder interferometer (MZI), any of which can be passive, tunable, or switchable.

An optical signal device useful in the immediately above method comprises a dynamically balanceable combiner, said combiner being capable of multiplexing laser signals from tunable or non-tunable laser sources, and said combiner containing at least one dynamically balanceable building block element selected from the group consisting of: Y junction, X junction, multimode interference (MMI) coupler, star coupler, directional coupler and Mach-Zehnder interferometer (MZI), any of which can be passive, tunable, or switchable.

A second method of combining a plurality of optical signals from laser sources, said sources being tunable or non-tunable, attenuates the power levels of all the optical signals to essentially the power of the weakest optical signal, and achieves essentially no excess loss, wherein said method comprises inputting said optical signals into a dynamically balanceable combiner selected from the group consisting of a: Y junction, X junction, MMI coupler, star coupler, directional coupler, or MZI, any of which can be passive, tunable, or switchable.

An optical signal device useful in the immediately above method comprises a dynamically balanceable combiner, said combiner being capable of multiplexing laser signals from tunable or non-tunable laser sources, and said combiner containing at least one dynamically balanceable building block element selected from the group consisting of: Y junction, X junction, multimode interference (MMI) coupler, star coupler, directional coupler and Mach-Zehnder interferometer (MZI), any of which can be passive, tunable, or switchable, and said combiner being capable of attenuating the power levels of said laser signals to essentially the power of the weakest optical signal while achieving essentially no excess loss.

A third method of combining a plurality of optical signals from laser sources, said sources being tunable or non-tunable, attenuates the power levels of all the optical signals to essentially the power of the weakest optical signal, wherein said method comprises inputting said optical signals into a dynamically balanceable combiner selected from the group consisting of a: Y junction, X junction, MMI coupler, star coupler, directional coupler, or MZI, any of which can be passive, tunable, or switchable.

An optical signal device useful in the immediately above method comprises a dynamically balanceable combiner, said combiner being capable of multiplexing laser signals from tunable or non-tunable laser sources, and said combiner containing at least one dynamically balanceable building block element selected from the group consisting of: Y junction, X junction, multimode interference (MMI) coupler, star coupler, directional coupler and Mach-Zehnder interferometer (MZI), any of which can be passive, tunable, or switchable, and said combiner being capable of attenuating the power levels of said laser signals to essentially the power of the weakest optical signal.

A fourth method of combining a plurality of M optical signals from laser sources, said sources being tunable or non-tunable, attenuates the power levels of all the optical signals to a level that is larger than that of the weakest optical signal divided by M and smaller than that of the weakest optical signal, wherein said method comprises inputting said optical signals into a dynamically balanceable combiner selected from the group consisting of at least one Y junction, X junction, MMI coupler, star coupler, directional coupler and MZI, each of which can be passive, tunable, or switchable.

An optical signal device useful in the immediately above method comprises a dynamically balanceable combiner, said combiner being capable of multiplexing M laser signals from tunable or non-tunable laser sources, and said combiner containing at least one dynamically balanceable building block element selected from the group consisting of: Y junction, X junction, multimode interference (MMI) coupler, star coupler, directional coupler and Mach-Zehnder interferometer (MZI), any of which can be passive, tunable, or switchable, and said combiner being capable of attenuating the power levels of said M laser signals to a level that is larger than that of the weakest optical signal divided by M and smaller than that of the weakest optical signal.

BRIEF DESCRIPTION OF THE DRAWINGS

Figure 1 shows fixed wavelength lasers combined using a multiplexer based on an AWG, an Echelle grating, or an array of thin film filters.

Figure 2 shows tunable wavelength lasers combined using an OXC and a multiplexer based on an AWG, an Echelle grating, or an array of thin film filters.

Figure 3 shows tunable wavelength lasers combined using a passive coupler.

Figure 4 shows an example of tunable wavelength lasers combined using a passive coupler, where 2 pairs of lasers are combined, each pair consisting of a main laser and a backup laser.

Figure 5 shows a dynamic combiner that combines 2 of 4 tunable lasers.

Figure 6 is an embodiment of a dynamic combiner that combines 2 of 4 tunable lasers, said combiner consisting of four 2 x 1 dynamically balanceable combiners.

Figure 7 is a lossless dynamic M-channel combiner.

Figure 8 embodiment show a tunable highly wavelength sensitive directional coupler that allows for lossless combination of two optical signals of different wavelengths, said signals entering two different input arms and exiting the same output arm.

Figure 8a shows a computer simulation of this device when an optical signal at 1510 nm wavelength enters the right input arm.

In Figure 8b an optical signal at 1565 nm wavelength enters the left input arm of the device in 8a.

DETAILED DESCRIPTION OF THE INVENTION

In the first embodiment of this invention, a method is described to measure and combine a percentage of the optical power from a plurality of laser sources, said percentage being larger than that in conventional designs, and the optical power of all optical signals exiting the combiner being essentially equal.

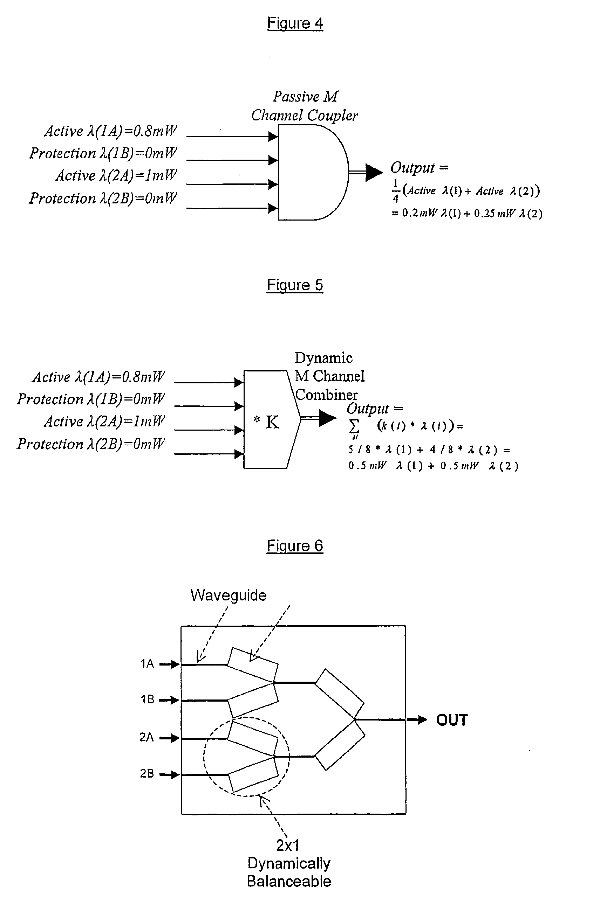

This design is presented in Figure 5.

K is a coefficient matrix used to dynamically scale each of the input $\lambda(i)$ channels.

In the example of Figure 5 with 20% difference in the power level, the use of a dynamic combiner allows to achieve a 150% efficiency improvement relative to conventional combiners.

An example of a practical implementation of the embodiment shown in Figure 5 would be a tree of $2\times1$ dynamically balanceable combiners, based on inverted $1\times2$ Y-branch-based optical switches operated between the ON and the OFF state. Figure 6 shows such an implementation for a $4\times1$ combiner.

An example showing the principle of operation of a $2\times1$ dynamically balanceable combiner based on a $2\times1$ Y-branch with 2 input arms and one output arm: is where, for example, the actuation mechanism is the thermo-optic effect, where routing is achieved by applying heat to vary the refractive index of the material, and where the Y-branch is made of polymer, a material with a negative thermo-optic coefficient, meaning that the material refractive index decreases with increasing temperature. Two resistive metal heaters are fabricated on the Y-branch, one in the proximity of each input arm. When no power is applied to the heaters, essentially 50% of the light in each arm exits the output arm. When power is applied to the heater of one output arm, said arm is heated, its refractive index is decreased, and less than 50% of the light in the actuated arm exits the output arm, whereas more than 50% of the light in the non-actuated arm exits the output arm. By applying power to one heater at a time and controlling the power level, the output ratio can be controlled between 0%/100% and 100%/0%, where the first number represents the percent of light from the "left" input arm exiting the output arm, and the second number represents the percent of light from the "right" input arm exiting the output arm.

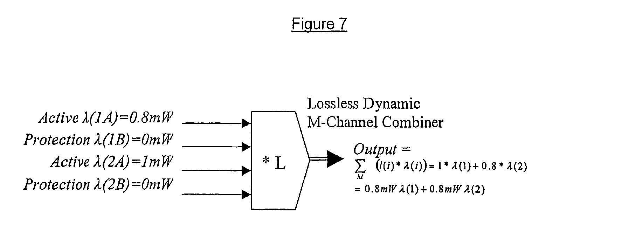

The second embodiment of this invention is a method to measure and combine essentially the *totality* of the optical power from a plurality of laser sources operating at different and known wavelengths. This method also allows to load balance all channels by equalizing the optical power of all optical signals exiting the combiner to the value of the weakest signal. This method takes advantage of the fact that the carrier wavelength of each optical signal is known, and uses tunable wavelength-dependent couplers to achieve essentially lossless combining. In a protection configuration, each active channel is routed essentially losslessly to the input of the combiner using switching to eliminate the inactive sources, then all the optical signals from the active sources enter the essentially lossless dynamic combiner. This novel design is presented in Figure 7.

L is a coefficient matrix used to dynamically scale each of the input A(i) channels to the optical power level of the weakest channel for load balancing.

In the example of Figure 7 with 20% difference in the power level, the use of a lossless dynamic combiner allows to achieve a 60% efficiency improvement relative to the plain dynamic combiner of Figure 5, and a 300% efficiency improvement relative to the conventional combiners of Figure 4.

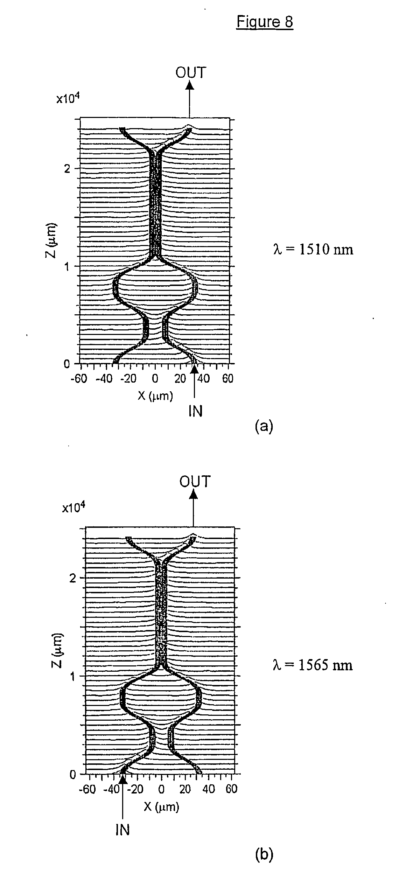

An example of a practical implementation of the embodiment shown in Figure 7 would use a directional coupler as the tunable wavelength-dependent coupler. Figure 8 shows a tunable highly wavelength sensitive directional coupler that allows to achieve lossless dynamic combining of two optical signals of different wavelengths. Figure 8(a) shows the result of a computer simulation of this device when an optical signal at 1510 nm wavelength enters the *right* input arm (input is at bottom), in which case the optical signal exits the right output arm. In Figure 8(b), an optical signal at 1565 nm wavelength enters the *left* input arm of the same device, and the optical signal exits the right output arm (1510 nm light entering the left input arm would have exited the left output arm). Therefore this design achieves multiplexing with no excess loss. This device can be tunable so that any two optical signals of different wavelengths entering the two different input arms exit the same output arm.

It should be noted that the loss discussed above is excess loss, i.e. theoretical loss that is present by design (e.g., a balanced 50/50 or $1\times2$ splitter or 2x1 combiner has an excess loss of 50% or 3 dB). The lossless devices described above are no-excess-loss devices, and an optical signal traversing these devices will have a propagation loss, which is typically equal to absorption loss + radiation loss + scattering loss + coupling loss - gain (not all of these components are always present, and others components might be present).

It should also be noted that the tunability discussed above can be achieved using any actuation means, including heat, electric field, magnetic field, pressure, or any combination thereof.

## Claims

1.  A method comprising:

    disposing a 2 × 1 Y-branch optical waveguide on a substrate, said Y-branch consisting essentially of two converging input branches and a single output branch, each said input branch being provided with an independent heating means proximate thereto;
    inputting a first optical signal to one of said input branches, and simultaneously inputting a second optical signal to the other of said branches;
    actuating one or both said heaters;
    adjusting the degree of heating in each said heater in order to adjust the relative intensity of said introduced optical signals to achieve a desired ratio; and
    directing the resulting output signal into at least one optical fiber.

2.  The method of claim 1 further comprising an array of said 2 × 1 Y-branches.

3.  The method of claim 1 wherein said Y-branch is polymeric.

4.  The method of claim 1 wherein said first and second optical signals are from different signal sources.

5.  The method of claim 1 wherein said first and second optical signals are from one or more laser sources.

6.  The method of claim 4 wherein each of said different sources is a laser.

7.  The method of claim 1 wherein said heating means is electrical resistance heating.

Figure 1

Fixed Wavelength Lasers $\Bigg\{$

$\lambda(1)$ ⟶
$\lambda(2)$ ⟶
- ⟶
- ⟶
- ⟶
$\lambda(M)$ ⟶

$\Rightarrow$ Output $= \sum_{1}^{M} \lambda(i)$

Figure 2

M×N OXC

Tunable Wavelength Lasers $\Bigg\{$

$\lambda(1)$ ⟶
$\lambda(2)$ ⟶
- ⟶
- ⟶
- ⟶
$\lambda(M)$ ⟶

N Channel Mux

Output $= \sum_{1}^{M} \lambda(i)$

Figure 3

Tunable Wavelength Lasers $\Bigg\{$

$\lambda(1)$ ⟶
$\lambda(2)$ ⟶
- ⟶
- ⟶
- ⟶
$\lambda(M)$ ⟶

Passive M-Channel Coupler

Output $= \dfrac{1}{M} \sum_{1}^{M} \lambda(i)$

Figure 4

*Passive M*
*Channel Coupler*

*Active λ(1A)=0.8mW*
*Protection λ(1B)=0mW*
*Active λ(2A)=1mW*
*Protection λ(2B)=0mW*

$Output =$
$\frac{1}{4}(Active\ \lambda(1) + Active\ \lambda(2))$
$= 0.2\,mW\,\lambda(1) + 0.25\,mW\,\lambda(2)$

Figure 5

*Active λ(1A)=0.8mW*
*Protection λ(1B)=0mW*
*Active λ(2A)=1mW*
*Protection λ(2B)=0mW*

Dynamic
M Channel
Combiner

* K

$Output =$
$\sum_{M} (k(i) * \lambda(i)) =$
$5/8 * \lambda(1) + 4/8 * \lambda(2) =$
$0.5\,mW\ \lambda(1) + 0.5\,mW\ \lambda(2)$

Figure 6

Waveguide

1A
1B
2A
2B

OUT

2x1
Dynamically
Balanceable

Figure 7

Active $\lambda(1A)=0.8mW$ ——————→
Protection $\lambda(1B)=0mW$ ——————→
Active $\lambda(2A)=1mW$ ——————→
Protection $\lambda(2B)=0mW$ ——————→

Lossless Dynamic
M-Channel Combiner

$* L$ ⟹

$Output =$
$\sum_{M} (l(i) * \lambda(i)) = 1 * \lambda(1) + 0.8 * \lambda(2)$
$= 0.8mW\,\lambda(1) + 0.8mW\,\lambda(2)$

Figure 8

(a)

(b)

# EP 1 603 261 A1

**European Patent Office**

## EUROPEAN SEARCH REPORT

Application Number

EP 05 01 6705

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | PATENT ABSTRACTS OF JAPAN<br>vol. 008, no. 129 (P-280),<br>15 June 1984 (1984-06-15)<br>& JP 59 033430 A (TATEISHI DENKI KK),<br>23 February 1984 (1984-02-23)<br>* abstract *<br>----- | 1-7 | H04J14/02<br>H04B10/155<br>G02F1/313 |
| X | DE 199 40 050 A1 (SIEMENS AG)<br>30 November 2000 (2000-11-30)<br>* claims 1-14 *<br>----- | 1-7 | |
| X | WO 96/33441 A (AKZO NOBEL N.V; KLEIN KOERKAMP, HERMANUS, MARCELLINUS, MARIA)<br>24 October 1996 (1996-10-24)<br>* the whole document *<br>----- | 1-7 | |
| | | | **TECHNICAL FIELDS SEARCHED (Int.Cl.7)**<br><br>H04J<br>H04B<br>G02F |

The present search report has been drawn up for all claims

| Place of search | Date of completion of the search | Examiner |
|---|---|---|
| Munich | 7 October 2005 | Belloni, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 05 01 6705

This annex lists the patent family members relating to the patent documents cited in the above-mentioned European search report.
The members are as contained in the European Patent Office EDP file on
The European Patent Office is in no way liable for these particulars which are merely given for the purpose of information.

07-10-2005

| Patent document cited in search report | | | Publication date | Patent family member(s) | | Publication date |
|---|---|---|---|---|---|---|
| JP 59033430 | A | | 23-02-1984 | NONE | | |
| DE 19940050 | A1 | | 30-11-2000 | NONE | | |
| WO 9633441 | A | | 24-10-1996 | CA | 2217691 A1 | 24-10-1996 |
| | | | | CN | 1182484 A | 20-05-1998 |
| | | | | JP | 11503842 T | 30-03-1999 |

EPO FORM P0459

For more details about this annex : see Official Journal of the European Patent Office, No. 12/82